# EUROPEAN PATENT APPLICATION

(11) **EP 1 813 380 A1**
(43) Date of publication of application: **01.08.2007**
(21) Application number: 05813352.1
(22) Date of filing: 28.10.2005
(51) Int. Cl.: B23K 26/28, F15B 15/14

(54) **LASER WELDING METHOD FOR HYDRAULIC CYLINDERS**

(30) Priority: 29.10.2004 ES 200402474 U
(71) Applicant: Cilindros y Cromados Palentinos, S.L., 34210 Dueñas (ES)
(72) Inventor: BECOECHEA GOMEZ, Jesus, E-34210 Dueñas (ES)
(74) Representative: Manzano Cantos, Gregorio
(86) International application number: PCT/ES2005/000584
(87) International publication number: WO 2006/048485

(57) **Abstract**

Laser welding procedure for hydraulic cylinders consisting of incorporating, in the area next to the welding station, means to move the machined cylinder tubes and the oil-ports; fitting the cylinder tube, the bottom, the correspondent oil-ports and other accessories; placing the oil-ports on the tubes, and carrying the full set to the area where the machined bottoms are placed with the help of a press; featuring a welding head with water-cooled standard mirrors.

## Description

### OBJECT OF INVENTION

This descriptive memory refers to an Invention Patent application corresponding to a laser welding procedure for hydraulic cylinders, with the evident purpose of achieving the manufacturing of hydraulic cylinders with a proper finish, improving their quality as well as the cylinder sealing by preventing any type of leak from the area where the welding has been performed.

### FIELD OF INVENTION

This invention applies to the industry devoted to the manufacturing of devices, mechanisms and auxiliary elements for laser welding.

### BACKGROUND OF INVENTION

The applicant knows current procedures for the manufacturing of hydraulic cylinders, which is based on a first operation consisting of sawing the honed tube and end facing both sides, then drilling the oil inlet holes and after that welding the oil-port that is opposite to the bottom. This generates an inner deformation on the tube of the cylinder.

Afterwards, the thread and the seating are machined inside, and in this phase deformation is eliminated when machining the inside of the tube.

The bottom is welded, and the oil-port next to the bottom is also welded. This process is carried out with an automatic machine in 140 seconds or so.

The obvious solution to this matter would be to have a non-heating laser welding that obviously would not strain as a result of fusing the parts to be fixed without any material addition, and therefore the operation is substantially faster and the cylinder finish results more aesthetic.

It must be pointed out that it would be desirable that the welding performed by the laser is strong enough to bear the working pressures of the cylinder, and that the materials are compatible when fusing.

The welding applied for the invention will not create leeks when fusing and, consequently, required sealing will be obtained.

### DESCRIPTION OF INVENTION

The laser welding procedure for hydraulic cylinders that the invention proposes gets from a CNC lathe a total guarantee for the maximum tolerance required for this labour. A worker places on a bench all cylinder components, like the tube, the two oil-ports and the bottom, or other accessories, and then the laser welding starts working by welding the oil-ports and, after that, the bottom. Average esteemed time for these operations is 30 seconds.

To be more precise, the laser welding procedure for hydraulic cylinders that is object of the invention starts from the use of a machine that will perform automatically all necessary weldings in order to fix the cylinder body, the bottom and the elements where the fittings will be screwed.

The assembly that is tried to achieve for cylinders would be as follows:
- The cylinder tubes, bottoms and oil-ports are placed in an area next to the welding station.
- The worker takes the tube of the cylinder that he/she wants to manufacture, the bottom and the oil-ports, and he/she fits the bottom and the oil-ports on the tube.
- Once all elements are well fitted on the correspondent areas, the cylinder is taken to the welding station.
- When the machine finishes the different welding operations, the cylinder is removed to the storage area.

In order to fulfil the welding tests, a 4500-watt CO₂ laser equipment which must be cooled by diffusion, excited by radiofrequency and with a polarized normal pulsed is needed.

This equipment has a welding head with an angle adjustment for lasers, which features water-cooled standard mirrors for the guidance of the laser beam, with a 360-degree mobility.

The laser equipment is assembled onto a frame and the head is fitted on three servo controlled axes, which are run by a CNC in order to guide the welding trajectory so as the first axis is servo controlled and positioned vertically, meanwhile the second axis - which is servo controlled as well - is configured as a circular divider, and the third head axis adopts a horizontal configuration and is capable of performing advance and backward movements.

Finally the piece to be welded that is on a bench has a fourth servo-controlled axis that generates the cylinder turn and a fifth axis to perform the piece displacement.

### FRIOR PERPOMANCE OF INVENTION

To be more precise, the advocated laser welding procedure for hydraulic cylinders is established from the aim of getting the required weldings in order to fix the cylinder body, its bottom and the oil-ports.

The cylinder tubes, bottoms and oil-ports are carried to an area next to the welding station, but these elements should have been previously machined so as make ensure they fit in the right way. Doing so it is clearly stated the fixing area between both parts and, therefore the area where the welding should be done. Otherwise it would not be valid, as the laser welding procedure requires a high precision on the outlines.

The worker fulfils a pre-assembly by placing the bottom and the oil-ports on the cylinder tube, and he/she will take a special care in checking that these parts are perfectly assembled and fixed so that there is no separation during the welding process.

Once the oil-ports are right secured, the set is carried to the place where the bottoms are. They must be properly machined so that the tolerances are accurate enough to be tightly fixed on the cylinder tube.

The process of fixing the bottom, the oil-ports and the tube is carried out on a press and, by tightly fitting these elements, it is guaranteed that they will not move neither during the removal of the whole set to the welding station nor during the welding process. On the other hand, this also guarantees that the pieces are centred properly, and the area to be welded results perfectly defined.

When all elements are fitted on the correct site, the set is carried to the welding station; the cylinder is placed on the right position and then the welding process starts and, once the machine finishes with the different weldings, the cylinder is moved to the storage area. In order to optimize the procedure, the worker will be fitting the tube, the oil-ports and the bottom of the next cylinder to be welded at the same time that the current cylinder is being welded.

## Claims

1. Laser welding procedure for hydraulic cylinders including a machine to perform automatically the necessary weldings to fix the cylinder body, its bottom and the oil-ports, which is **characterized by** an area next to the welding station where the machined tubes and oil-ports are located, the correspondent oil-ports are placed and fitted on the cylinder tube, and then the full set is moved to another area where the machined bottoms are placed with the help of a press, then the full cylinder set in carried to the welding station, and finally the cylinder is moved to the storage area.

2. Laser welding procedure for hydraulic cylinders, as laid down on the first claim, which is **characterized by** the fact that the equipment features a welding head with water-cooled standard mirrors, with a 360-degree mobility.

3. Laser welding procedure for hydraulic cylinders, as laid down on the previous claims, which is **characterized by** the fact that the first axis is servo controlled and positioned vertically, meanwhile the second axis - which is servo controlled as well - is configured as a circular divider, and the third head axis adopts a horizontal configuration and is capable of performing advance and backward movements.

4. Laser welding procedure for hydraulic cylinders, as laid down on the previous claims, which is **characterized by** the fact that the piece to be welded that is on a bench has a fourth servo-controlled axis that generates the cylinder turn and a fifth axis to perform the piece displacement.
